# EUROPEAN PATENT APPLICATION

(11) **EP 4 557 717 A1**
(43) Date of publication of application: **21.05.2025**
(21) Application number: 23839076.9
(22) Date of filing: 17.07.2023
(51) Int. Cl.: H04N 7/14

(54) **AUDIO AND VIDEO CALLING METHOD AND APPARATUS**

(30) Priority: 15.07.2022 CN 202210840292
(71) Applicant: ZTE CORPORATION, Shenzhen, Guangdong 518057 (CN)
(72) Inventor: WEI, Xuesong, Shenzhen, Guangdong 518057 (CN)
(74) Representative: Chimini, Francesco
(86) International application number: PCT/CN2023/107721
(87) International publication number: WO 2024/012590

(57) **Abstract**

Provided is a method and device for audio/video calling. According to the present disclosure, after an audio/video call between a calling user and a called user is anchored to a media server, an Al component is used to receive an audio stream and a video stream of the audio/video call between the calling user and the called user, which are copied by the media server; and the Al component recognizes specific content in the audio stream and/or the video stream, and the media server superimposes on the audio/video call between the calling user and the called user an animation effect corresponding to the specific content. The problem of single audio/video calling functionality in the related art is solved, and the interestingness and intellectualization level of audio/video calls are increased.

## Description

### Technical Field

The present disclosure relate to the field of communications, and in particular, to a method and device for audio/video calling.

### Background

5G new calls are an upgrade to basic audio and video calls. On the basis of audio and video calls based on voice over LTE (VoLTE) or 5G voice over New Radio (VoNR), a quicker, clearer, more intelligent and broader call experience can be realized. Users are supported to perform real-time interaction during a call, and richer and more convenient call functions are provided for the user.

In a traditional audio/video call, only a call function can be carried out, and more intelligent functions cannot be added. With the promotion of a 5G video service, more and more people are trying to use a video calling function; however, the current video calling mostly offers basic functions without additional functions and intelligent functions. Although some APPs also have tried to introduce some interesting functions, such as a virtual background and a virtual avatar, these implementations are rare during voice calling, and are all implemented on the basis of a client APP, and users are required to install the APP, which greatly hinders the promotion of the service.

### Summary

The present disclosure provide a method and device audio/video calling, so as to at least solve the problem of single audio/video calling functionality in the related art.

According to the present disclosure, an audio/video calling method is provided, including: after an audio/video call between a calling user and a called user is anchored to a media server, an artificial intelligence (AI) component receives an audio stream and a video stream of the audio/video call between the calling user and the called user, which are copied by the media server; and the Al component recognizes specific content in the audio stream and/or the video stream, and the media server superimposes on the audio/video call between the calling user and the called user an animation effect corresponding to the specific content.

According to the present disclosure, an audio/video calling method is further provided, including: after an audio/video call between a calling user and a called user is anchored to a media server, the media server copies to an artificial intelligence (AI) component an audio stream and a video stream of the audio/video call between the calling user and the called user; and according to a recognition result of specific content in the audio stream and/or the video stream by the Al component, the media server superimposes on the audio/video call between the calling user and the called user an animation effect corresponding to the specific content.

According to the present disclosure, an audio/video calling device is further provided, including: a first receiving module for receiving, after an audio/video call between a calling user and a called user is anchored to a media server, an audio stream and a video stream of the audio/video call between the calling user and the called user, which are copied by the media server; and an recognition processing module for recognizing specific content in the audio stream and/or the video stream, so that the media server superimposes on the audio/video call between the calling user and the called user an animation effect corresponding to the specific content.

According to the present disclosure, an audio/video calling device is further provided, including: a copying and sending module, configured to copy, after an audio/video call between a calling user and a called user is anchored to a media server, to an artificial intelligence (AI) component an audio stream and a video stream of the audio/video call between the calling user and the called user; and a superimposing module, configured to superimpose, according to a recognition result of specific content in the audio stream and/or the video stream by the Al component, on the audio/video call between the calling user and the called user an animation effect corresponding to the specific content.

According to the present disclosure, a computer-readable storage medium is further provided, the computer-readable storage medium storing a computer program, wherein the computer program is configured to execute, when being run, the steps in any one of the method embodiments above.

According to the present disclosure, an electronic device is further provided, including a memory and a processor, the memory storing a computer program, and the processor being configured to run the computer program so as to execute the steps in any one of the method embodiments above.

### Brief Description of the Drawings

Fig. 1 is a structural block diagram of hardware of a mobile terminal for an audio/video calling method according to the present disclosure;
Fig. 2 is a flowchart of an audio/video calling method according to the present disclosure;
Fig. 3 is a flowchart of an audio/video calling method according to the present disclosure;
Fig. 4 is a flowchart of an audio/video calling method according to the present disclosure;
Fig. 5 is a flowchart of an audio/video calling method according to the present disclosure;
Fig. 6 is a flowchart of an audio/video calling method according to the present disclosure;
Fig. 7 is a flowchart of animation effect superimposing according to the present disclosure;
Fig. 8 is a structural block diagram of an audio/video calling device according to the present disclosure;
Fig. 9 is a structural block diagram of an audio/video calling device according to the present disclosure;
Fig. 10 is a structural block diagram of a recognition processing module according to the present disclosure;
Fig. 11 is a structural block diagram of a recognition processing module according to the present disclosure;
Fig. 12 is a structural block diagram of an audio/video calling device according to the present disclosure;
Fig. 13 is a structural block diagram of an audio/video calling device according to the present disclosure;
Fig. 14 is a structural block diagram of an audio/video calling device according to the present disclosure;
Fig. 15 is a structural block diagram of a superimposing module according to the present disclosure;
Fig. 16 is a schematic flowchart of user video calling anchoring according to the present disclosure; and
Fig. 17 is a schematic flowchart of AI component recognition and animation effect superimposing according to the present disclosure.

### Detailed Description of the Embodiments

Hereinafter, the present disclosure are described in detail with reference to the accompanying drawings and in combination with the embodiments.

It should be noted that the terms "first", "second" etc., in the description, claims, and accompanying drawings of the present disclosure are used to distinguish similar objects, and are not necessarily used to describe a specific sequence or precedence order.

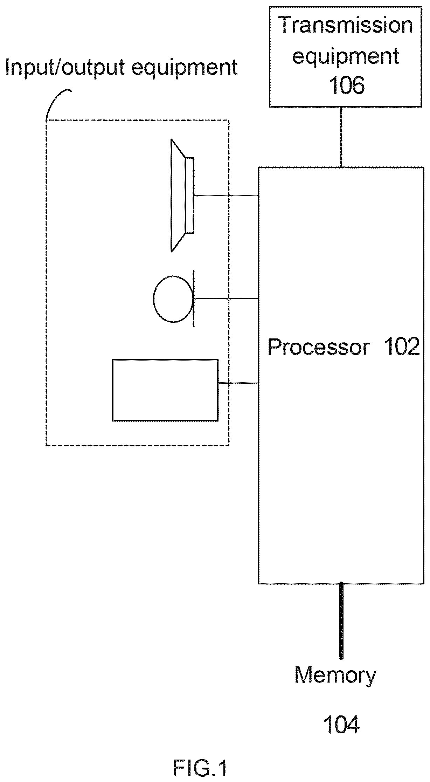

Method embodiments provided in the present disclosure can be executed in a mobile terminal, a computer terminal or a similar computing device. Taking the method embodiments being executed on a mobile terminal as an example, Fig. 1 is a structural block diagram of hardware of a mobile terminal for an audio/video calling method according to the present disclosure. As shown in Fig. 1, the mobile terminal may include one or more (only one processor is shown in Fig. 1) processors 102 (the processors 102 may include, but are not limited to, processing devices such as a microprocessor MCU or a programmable logic device FPGA) and a memory 104 for storing data. The mobile terminal may further include transmission equipment 106 for communication functions and input/output equipment 108. A person of ordinary skill in the art would understand that the structure as shown in Fig. 1 is merely exemplary, and does not limit the structure of the mobile terminal. For example, the mobile terminal may further include more or fewer components than those shown in Fig. 1, or have a different configuration from that shown in Fig. 1.

The memory 104 may be configured to store a computer program, for example, a software program and a module of application software, such as a computer program corresponding to the audio/video calling method in the present disclosure; and the processor 102 executes various functional applications and data processing by running the computer program stored in the memory 104, i.e. implementing the described method. The memory 104 may include a high-speed random access memory, and may also include a non-transitory memory, such as one or more magnetic storage devices, flash memories or other non-transitory solid-state memories. In some examples, the memory 104 may further include memories remotely arranged with respect to the processors 102, and these remote memories may be connected to the mobile terminal via a network. Examples of the network include, but are not limited to, the Internet, an intranet, a local area network, a mobile communication network and combinations thereof.

The transmission equipment 106 is used to receive or send data via a network. Specific examples of the network may include a wireless network provided by a communication provider of the mobile terminal. In one example, the transmission equipment 106 includes a network interface controller (NIC for short) which may be connected to other network equipment by means of a base station, thereby being able to communicate with the Internet. In one example, the transmission equipment 106 may be a radio frequency (RF for short) module which is configured to communicate with the Internet in a wireless manner.

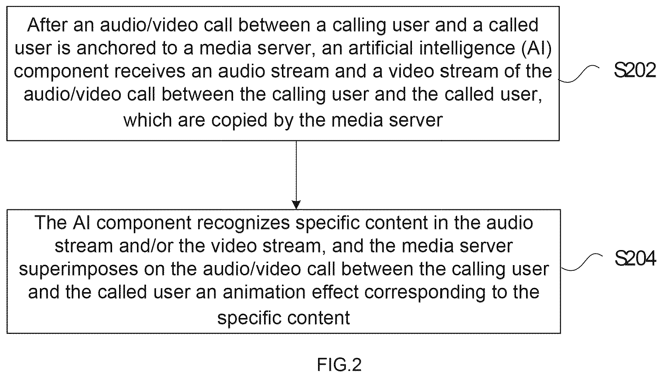

The present embodiment provides an audio/video calling method running on the mobile terminal. Fig. 2 is a flowchart of an audio/video calling method according to the present disclosure. As shown in Fig. 2, the flow includes the following steps:
step S202: after an audio/video call between a calling user and a called user is anchored to a media server, an Al component receives an audio stream and a video stream of the audio/video call between the calling user and the called user, which are copied by the media server; and
step S204: the Al component recognizes specific content in the audio stream and/or the video stream, and the media server superimposes on the audio/video call between the calling user and the called user an animation effect corresponding to the specific content.

By means of the described steps, after an audio/video call between a calling user and a called user is anchored to a media server, an Al component is used to receive an audio stream and a video stream of the audio/video call between the calling user and the called user, which are copied by the media server; and the AI component recognizes specific content in the audio stream and/or the video stream, and the media server superimposes on the audio/video call between the calling user and the called user an animation effect corresponding to the specific content. The problem of single audio/video calling functionality in the related art is solved, and the interestingness and intellectualization level of audio/video calls are increased.

The execution subject of the described steps may be, but is not limited to, a base station or a terminal.

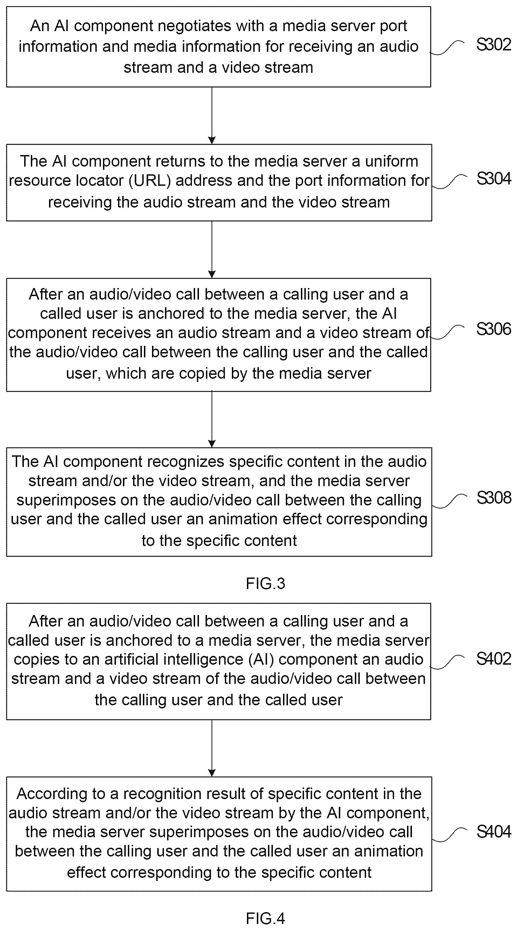

In some embodiments, before the AI component receives the audio stream and the video stream of the audio/video call between the calling user and the called user, which are copied by the media server, the method further includes: the Al component receives a negotiation request from the media server; and the Al component returns to the media server a uniform resource locator (URL) address and port information of a receiving end. Fig. 3 is a flowchart of an audio/video calling method according to the present disclosure. As shown in Fig. 3, the flow includes the following steps:
step S302: an Al component negotiates with a media server port information and media information for receiving an audio stream and a video stream;
step S304: the Al component returns to the media server a uniform resource locator (URL) address and the port information for receiving the audio stream and the video stream;
step S306: after an audio/video call between a calling user and a called user is anchored to the media server, the Al component receives an audio stream and a video stream of the audio/video call between the calling user and the called user, which are copied by the media server; and
step S308: the Al component recognizes specific content in the audio stream and/or the video stream, and the media server superimposes on the audio/video call between the calling user and the called user an animation effect corresponding to the specific content.

In some embodiments, the Al component recognizes the specific content in the audio stream and/or the video stream includes: the Al component transcribes the audio stream into text, and sends the text to a service application, such that the service application recognizes a keyword in the text, and queries an animation effect corresponding to the keyword.

In some embodiments, the Al component recognizes the specific content in the audio stream and/or the video stream further includes: the Al component recognizes a specific action in the video stream, and sends a recognition result to a service application, such that the service application queries an animation effect corresponding to the specific action.

In some embodiments, the animation effect includes at least one of the following: a static image or a dynamic video.

In the present disclosure, an audio/video calling method is provided. Fig. 4 is a flowchart of an audio/video calling method according to the present disclosure. As shown in Fig. 4, the flow includes the following steps:
step S402: after an audio/video call between a calling user and a called user is anchored to a media server, the media server copies to an artificial intelligence (AI) component an audio stream and a video stream of the audio/video call between the calling user and the called user; and
step S404: according to a recognition result of specific content in the audio stream and/or the video stream by the Al component, the media server superimposes on the audio/video call between the calling user and the called user an animation effect corresponding to the specific content.

In some embodiments, before the media server copies to the Al component the audio stream and the video stream of the audio/video call between the calling user and the called user, the method further includes: the media server allocates media resources to the calling user and the called user respectively according to an application of a call platform, such that the call platform re-anchors the calling user and the called user to the media server respectively according to the applied media resources for the calling user and the called user.

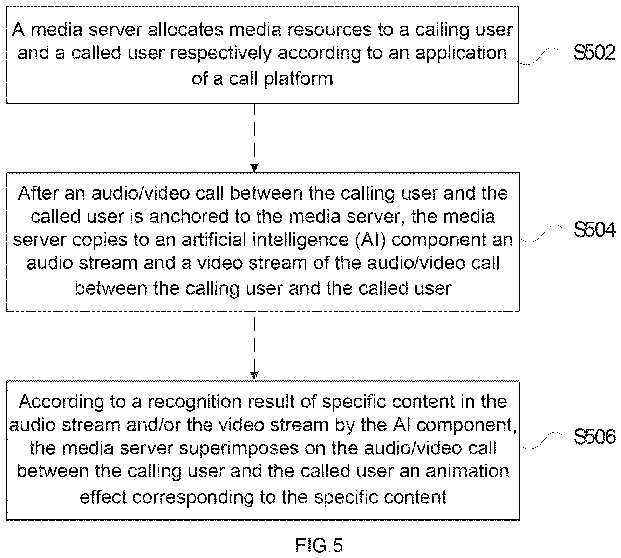

Fig. 5 is a flowchart of an audio/video calling method according to the present disclosure. As shown in Fig. 5, the flow includes the following steps:
step S502: a media server allocates media resources to a calling user and a called user respectively according to an application of a call platform;
step S504: after an audio/video call between the calling user and the called user is anchored to the media server, the media server copies to an artificial intelligence (AI) component an audio stream and a video stream of the audio/video call between the calling user and the called user; and
step S506: according to a recognition result of specific content in the audio stream and/or the video stream by the Al component, the media server superimposes on the audio/video call between the calling user and the called user an animation effect corresponding to the specific content.

In some embodiments, before the media server copies to the Al component the audio stream and the video stream of the audio/video call between the calling user and the called user, the method further includes: the media server receives a request instruction issued by a service application for copying the audio stream and the video stream to the Al component, the request instruction carrying an audio stream ID, a video stream ID, and a URL address of the Al component; the media server negotiates with the Al component port information and media information for receiving the copied audio stream and video stream; and the media server receives the URL address and the port information for receiving the copied audio stream and video stream, which are returned by the Al component.

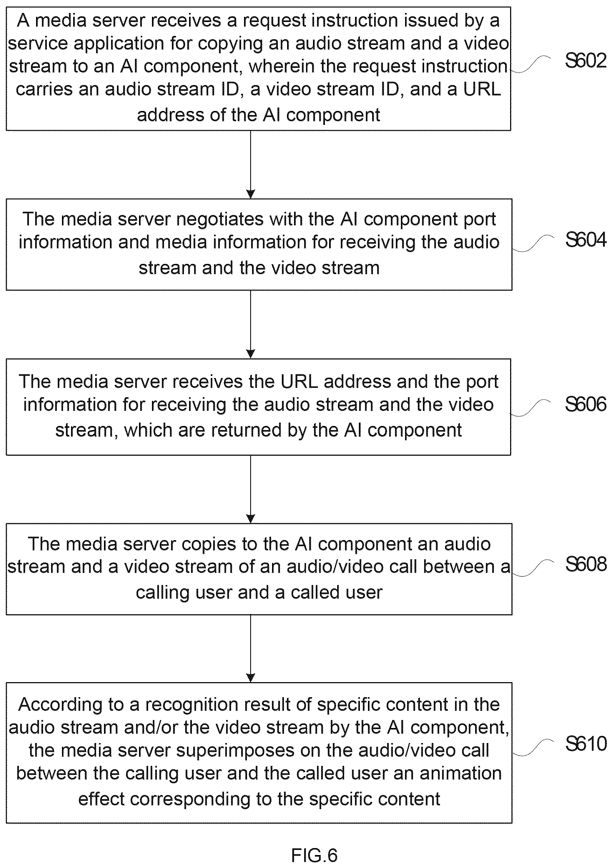

Fig. 6 is a flowchart of an audio/video calling method according to the present disclosure. As shown in Fig. 6, the flow includes the following steps:
step S602: a media server receives a request instruction issued by a service application for copying an audio stream and a video stream to an Al component, wherein the request instruction carries an audio stream ID, a video stream ID, and a URL address of the Al component;
step S604: the media server negotiates with the Al component port information and media information for receiving the audio stream and the video stream;
step S606: the media server receives the URL address and the port information for receiving the audio stream and the video stream, which are returned by the Al component;
step S608: the media server copies to the Al component an audio stream and a video stream of an audio/video call between a calling user and a called user; and
step S610: according to a recognition result of specific content in the audio stream and/or the video stream by the Al component, the media server superimposes on the audio/video call between the calling user and the called user an animation effect corresponding to the specific content.

In some embodiments, according to the recognition result of the specific content in the audio stream and/or the video stream by the Al component, the media server superimposing on the audio/video call between the calling user and the called user the animation effect corresponding to the specific content includes: the media server receives a media processing instruction from a service application, wherein the media processing instruction is generated according to the recognition result of the specific content in the audio stream and/or the video stream by the Al component; and the media server superimposes on the audio/video call between the calling user and the called user an animation effect corresponding to the specific content.

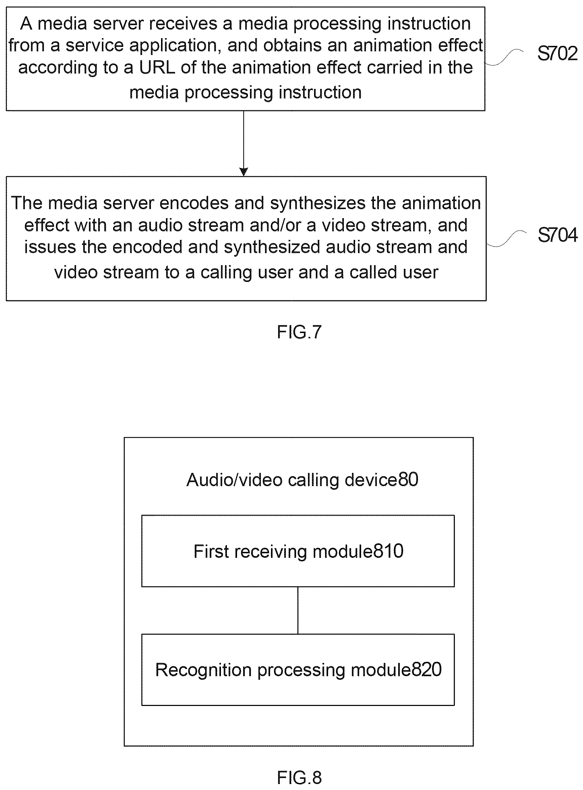

Fig. 7 is a flowchart of animation effect superimposing according to the present disclosure. As shown in Fig. 7, the flow includes the following steps:
step S702: a media server receives a media processing instruction from a service application, and obtains an animation effect according to a URL of the animation effect carried in the media processing instruction; and
step S704: the media server encodes and synthesizes the animation effect with an audio stream and/or a video stream, and issues the encoded and synthesized audio stream and video stream to a calling user and a called user.

From the description of the described embodiments, a person skilled in the art would have been able to clearly understand that the methods in the embodiments above may be implemented by using software and necessary general hardware platforms, and of course may also be implemented using hardware, but in many cases, the former is a better embodiment. On the basis of such understanding, the portion of the technical solution of the present disclosure that contributes in essence or to the related art may be embodied in the form of a software product stored in a storage medium (such as an ROM/RAM, a magnetic disk and an optical disc); and the storage medium includes several instructions to cause terminal equipment (which may be a mobile phone, a computer, a server or network equipment, etc.) to perform the method according to the present disclosure.

According to the present disclosure, an audio/video calling device is provided. The device is configured to implement the described embodiments and preferred embodiments, and what has been described will not be repeated again. As used below, the terms "module" and "unit" may implement a combination of software and/or hardware of predetermined functions. Although the device described in the following embodiments is preferably implemented in software, implementation in hardware or a combination of software and hardware is also possible and could have been conceived.

Fig. 8 is a structural block diagram of an audio/video calling device according to the present disclosure. As shown in Fig. 8, the audio/video calling device 80 includes: a first receiving module 810 for receiving, after an audio/video call between a calling user and a called user is anchored to a media server, an audio stream and a video stream of the audio/video call between the calling user and the called user, which are copied by the media server; and an recognition processing module 820 for recognizing specific content in the audio stream and/or the video stream, so that the media server superimposes on the audio/video call between the calling user and the called user an animation effect corresponding to the specific content.

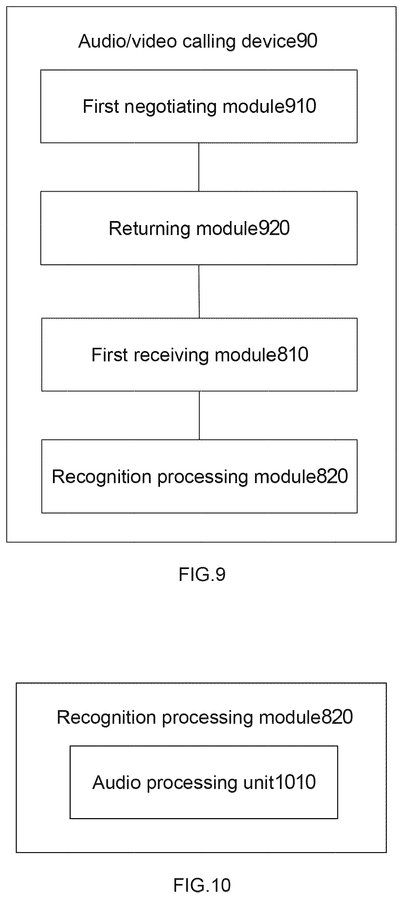

In some embodiments, Fig. 9 is a structural block diagram of an audio/video calling device according to the present disclosure. As shown in Fig. 9, in addition to the modules shown in Fig. 8, the audio/video calling device 90 further includes: a first negotiating module 910, configured to negotiate with a media server port information and media information for receiving an audio stream and a video stream; and a returning module 920, configured to return to the media server a uniform resource locator (URL) address and the port information for receiving the audio stream and the video stream.

In some embodiment, Fig. 10 is a structural block diagram of a recognition processing module according to the present disclosure. As shown in Fig. 10, the recognition processing module 820 includes: an audio processing unit 1010, configured to transcribe an audio stream into text, and send the text to a service application, such that the service application recognizes a keyword in the text, and queries an animation effect corresponding to the keyword.

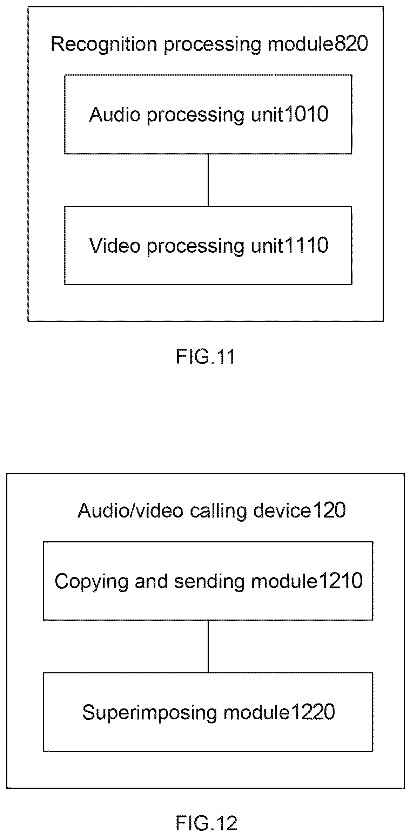

In some embodiments, Fig. 11 is a structural block diagram of a recognition processing module according to the present disclosure. As shown in Fig. 11, in addition to the unit shown in Fig. 10, the recognition processing module 820 further includes: a video processing unit 1110, configured to recognize a specific action in a video stream, and send a recognition result to a service application, such that the service application queries an animation effect corresponding to the specific action.

According to the present disclosure, an audio/video calling device is further provided. Fig. 12 is a structural block diagram of an audio/video calling device according to the present disclosure. As shown in Fig. 12, the audio/video calling device 120 includes: a copying and sending module 1210, configured to copy, after an audio/video call between a calling user and a called user is anchored to a media server, to an Al component an audio stream and a video stream of the audio/video call between the calling user and the called user; and a superimposing module 1220, configured to superimpose, according to a recognition result of specific content in the audio stream and/or the video stream by the Al component, on the audio/video call between the calling user and the called user an animation effect corresponding to the specific content.

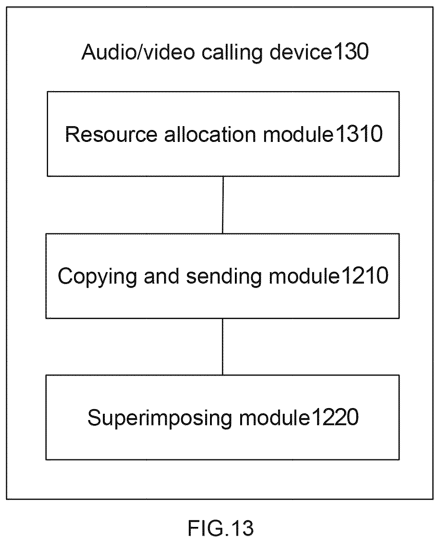

In some embodiments, Fig. 13 is a structural block diagram of an audio/video calling device according to the present disclosure. As shown in Fig. 13, in addition to the modules shown in Fig. 12, the audio/video calling device 130 further includes: a resource allocation module 1310, configured to allocate media resources to the calling user and the called user respectively according to an application of a call platform, such that the call platform re-anchors the calling user and the called user to the media server respectively according to the applied media resources for the calling user and the called user.

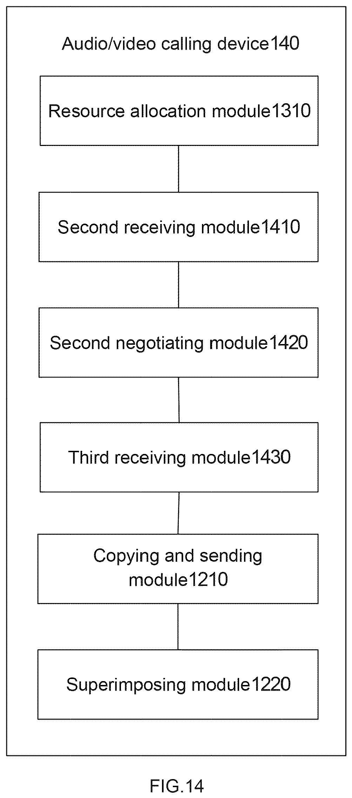

In some embodiments, Fig. 14 is a structural block diagram of an audio/video calling device according to the present disclosure. As shown in Fig. 14, in addition to the modules shown in Fig. 13, the audio/video calling device 140 further includes: a second receiving module 1410, configured to receive a request instruction issued by a service application for copying the audio stream and the video stream to the Al component, the request instruction carrying an audio stream ID, a video stream ID, and a URL address of the Al component; a second negotiating module 1420, configured to negotiate with the Al component port information and media information for receiving the audio stream and the video stream; and a third receiving module 1430, configured to receive the URL address and the port information for receiving the audio stream and the video stream, which are returned by the Al component.

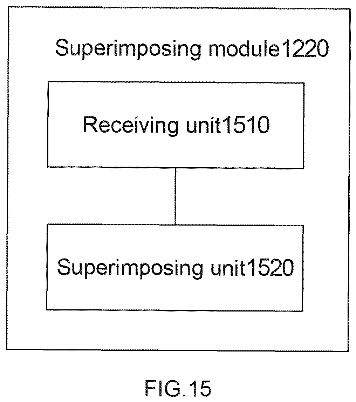

In some embodiments, Fig. 15 is a structural block diagram of a superimposing module according to the present disclosure. As shown in Fig. 15, the superimposing module 1220 includes: a receiving unit 1510, configured to receive a media processing instruction from a service application, and obtain an animation effect according to a URL of the animation effect carried in the media processing instruction; and a superimposing unit 1520, configured to encode and synthesize the animation effect with an audio stream and/or a video stream, and issue the encoded and synthesized audio stream and video stream to a calling user and a called user.

It should be noted that the described modules and units may be implemented by software or hardware. The latter may be implemented in the following manner, but is not limited thereto: all the described modules and units are located in the same processor; or the modules and units are located in different processors in any arbitrary combination manner.

The present disclosure further provide a computer-readable storage medium, the computer-readable storage medium storing a computer program, wherein the computer program is configured to execute, when being run, the steps in any one of the embodiments above.

In some embodiments, the computer-readable storage medium may include, but is not limited to: various media that can store a computer program, such as a USB flash drive, a read-only memory (ROM for short), a random access memory (RAM for short), a mobile hard disk, a magnetic disk, or an optical disc.

The present disclosure further provide an electronic device, including a memory and a processor, the memory storing a computer program, and the processor being configured to run the computer program so as to execute the steps in any one of the method embodiments above.

In some embodiments, the electronic device may further include transmission equipment and input/output equipment, wherein the transmission equipment is connected to the processor, and the input/output equipment is connected to the processor.

For specific examples in the present embodiment, reference can be made to the examples described in the described embodiments and embodiments, and thus they will not be repeated again in the present embodiment

To make a person skilled in the art better understand the solutions of the present disclosure, hereinafter, description is made in combination with specific scene embodiments.

The present disclosure are mainly based on VoLTE video calling; an automatic recognition function needs to be performed on audio/video, including voice recognition and video action recognition; after the recognition, a recognition result is returned; a service performs video processing, mainly performing decoding, video superimposing processing, encoding processing, etc., according to the returned recognition result; and finally, some animation effect functions are presented to both parties during a video call. The detailed description is as follows:
a user initiates native VoLTE video calling using a mobile phone terminal or switches to video calling after initiating voice calling, and the user has subscribed to a new call enhanced calling service function, otherwise, the function cannot be used.

First, both parties of a call need to be re-anchored, and the audio/video of both parties of the call needs to be re-anchored to a media server. Both parties of the call are renegotiated and are re-anchored to the media server, so as to control media streams of both parties, and generally, the calling party and the called party may be started to be anchored to a media plane after the called party answers.

After anchoring, an audio/video flow of the user needs to be re-controlled; the media server copies an audio/video stream of the subscribed user to an Al component, and the Al component recognizes the audio/video; in terms of audio, the Al component mainly performs voice-to-text conversion on audio, and then sends same to a service application, and the service application recognizes a keyword; and in terms of video, the Al component mainly performs intelligent recognition on video, and recognizes specific content.

After a certain keyword in the audio and a certain specific action in the video of the user are recognized, if the recognition is audio recognition, the Al component returns the transcribed text content to the service application, and the service application recognizes the keyword; and if the recognition is video recognition, the Al component directly performs recognition, and sends a recognition result to the service application, and finally, the application finds a corresponding special effect of a user's setting according to the user's setting, and instructs the media server to perform media processing on the video.

After the instruction is received, the media server acquires a corresponding animation effect of the user, downloads same locally, and then performs a video media processing function to superimpose the corresponding animation effect on the video of both parties.

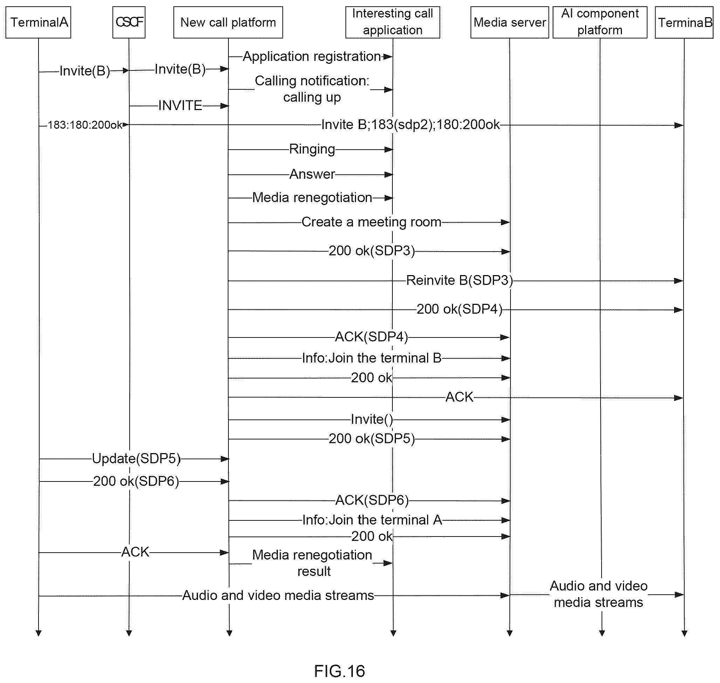

Fig. 16 is a schematic flowchart of user video calling anchoring according to the present disclosure. As shown in Fig. 16, the flow includes the following steps:
step 1602: when calling is initiated, a calling event is normally reported to a service application, for example, calling up, ringing, answer, and answer interrupt events, and the next operation needs to be instructed by a service.

Step 1604: after the calling is answered, the service authenticates a user and finds that the user has subscribed to an enhanced calling service, and then issues a media renegotiation control command.

Step 1606: after receiving a media anchoring instruction, a new call platform for implementing service function control and logic control starts to anchor a called party, first applies for a media resource for the called party, after application, uses the applied media resource to initiate a reinvite media renegotiation for the called party, after obtaining the media resource for the called party, returns same to a media server, and then adds the called terminal to a conference (in the present scene embodiment, anchoring is implemented by means of a conference), thereby completing an audio/video anchoring function for the called party. After the anchoring is completed, parameters of streams need to be returned to an anchoring initiator, such as a local stream, an audio stream id, a video stream id, and a transmitting/receiving direction; and a remote stream, an audio stream id, a video stream id, and a transmitting/receiving direction.

Step 1608: after the anchoring of the called party is completed, a media resource for a calling party is also applied for from the media server; after application, an update media update operation is initiated to the calling party, and the media resource that has been just applied for is carried to the calling party; and the calling party returns its own media resource, and the media resource of the calling party is also added to the conference, In this way, the media resources of both the calling party and the called party are added to the conference of the media server, thereby implementing the media anchoring functions for the calling party and the called party.

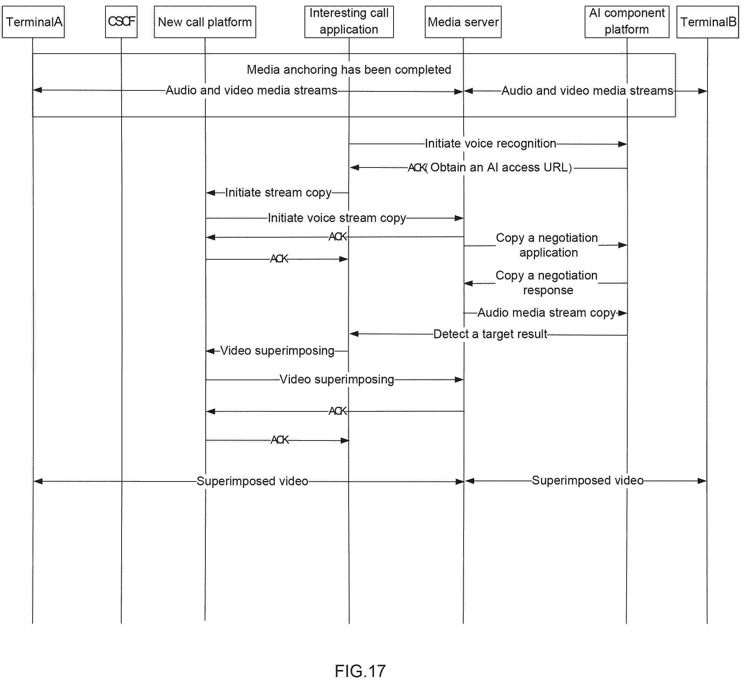

Fig. 17 is a schematic flowchart of AI component recognition and animation effect superimposing according to the present disclosure. As shown in Fig. 17, the flow includes the following steps:
step 1702: after anchoring of the called party and the calling party is completed, a service side, i.e. the service application, starts to apply to an Al component for an access address, and at the same time requests the Al component to perform an intelligent voice transcribe function and a video recognition operation, including voice-to-text conversion and video gesture recognition; and after the Al responds, a subsequently negotiated uniform resource locator (URL) of the Al is returned.

Step 1704: the service application starts to send an audio/video stream copy request instruction to the media server, the audio stream is copied to a corresponding Al component platform for audio recognition, and the video stream is copied to a corresponding Al component platform for video recognition. The carried parameters mainly include: an audio stream ID to be copied, a video stream ID, and a URL of a request AI.

Step 1706: after receiving a stream copy instruction, the media server needs to negotiate with the Al component for specific stream copy port and media information, including a copied IP, a port, a stream encoding/decoding type, etc.; after receiving a negotiation request from the media server, the Al performs processing, and finally responds and returns information, such as a corresponding copied address and port of a receiving end; and after negotiation, the media server initiates stream copy to the Al component platform. At the same time, the media server returns a copy result to the service application.

Step 1708: after receiving the copied stream, the Al component platform enables an intelligent recognition function for the Al, including transcribing the audio into text and recognizing a user-specified gesture in the video. After the audio is transcribed into text, the text and the URL address are directly returned.

Step 1710: during video recognition, if the Al component recognizes the corresponding key information, the information is reported to the service application immediately. If the key information is audio content, then the Al component returns the transcribed text content, and the service application recognizes the keyword. For the recognition of the keyword, the service application firstly stores all the text transcribed by the user, and then starts to perform keyword recognition each time newly added text is received, and if the keyword is recognized, flow processing after recognition is performed.

Step 1712: after the keyword is recognized, regardless of the keyword recognized by the service application itself or the dynamic gesture recognized by the Al, the service application queries the corresponding animation effect of the user's setting according to the recognized information, which may be a static image or a dynamic short video.

Step 1714: the business application issues a media processing instruction to the media server, wherein the animation effect is sent using a URL address of an animation effect resource; after receiving the media processing instruction, the media server first obtains the corresponding animation effect according to the URL of the animation effect, and may also cache same locally; and if the animation effect does not exist locally, the animation effect is obtained locally by means of URL access.

Step 1716: the media server performs media processing, performs video decoding on a server, performs encoding and synthesis processing on a user video stream, performs video encoding after synthesis, and then issues the video, wherein for the synthesized video, synthesis processing needs to be performed on a bidirectional downlink video of the calling party and the called party, such that both the calling party and the called party can see the same video processing result.

In conclusion, the audio/video calling method and device provided in the present disclosure mainly include a voice recognition part, a video intelligent recognition part and a video processing part, and specifically include two main functions: a voice-to-animation effect conversion function and a gesture-to-animation effect conversion function.

For the voice-to-animation effect conversion, if a user says some keywords, such as happy birthday, thanks and like during a call, a system side performs voice recognition, and after recognizing some keywords, reports same to a service side, and the service side instructs a media server to display a specific animation effect or image, for example, animation effects such as cakes, hearts or fireworks are displayed in a bidirectional video.

During a video call, a user's gesture action is automatically recognized, for example, if a user makes a heart-shaped gesture, after a predefined key action is recognized by an Al component, an animation effect of the key action is superimposed on a video of both parties, for example, images or animation effects such as heart and thumb up.

The present disclosure disclose an audio/video call based on VoLTE calling, and provide a server-based audio/video enhancement function, which can provide a more interesting call function as long as a user supports native VoLTE video calling without relying on APP and SDK support of a client, and can implement voice automatic recognition and video automatic recognition at the server, and after recognition, some animation effects are superimposed, greatly enhancing the interestingness of audio/video calling, and improving the usage experience of a user. This makes a user's call more interesting and intelligent. The operation experience of a user is greatly improved, and a voice call is more intelligent, which is very beneficial to the promotion and application of a 5G new call service.

It is apparent that a person skilled in the art shall understand that the described modules or steps in the present disclosure may be implemented using a general computing device, may be centralized on a single computing device or may be distributed on a network composed of multiple computing devices, and may be implemented using executable program codes of the computing device. Thus, the modules or steps may be stored in a storage device and executed by the computing device, and in some cases, the shown or described steps may be executed in a sequence different from that shown herein, or the modules or steps are manufactured into integrated circuit modules, or multiple modules or steps therein are manufactured into a single integrated circuit module for implementation. Thus, the present disclosure is not limited to any specific combination of hardware and software.

The content above is only preferred embodiments of the present disclosure and is not intended to limit the present disclosure. For a person skilled in the art, the present disclosure may have various modifications and variations. Any modifications, equivalent replacements, improvements, etc. made within the principle of the embodiments of the present disclosure shall all fall within the scope of protection of the present disclosure.

## Claims

1. A method for audio/video calling, the method comprising:
after an audio/video call between a calling user and a called user is anchored to a media server, receiving, by an artificial intelligence ,Al, component, an audio stream and a video stream of the audio/video call between the calling user and the called user, which are copied by the media server; and
recognizing, by the Al component, specific content in the audio stream and/or the video stream, and superimposing, by the Al component, on the audio/video call between the calling user and the called user an animation effect corresponding to the specific content.

2. The method according to claim 1, wherein before receiving, by the Al component, the audio stream and the video stream of the audio/video call between the calling user and the called user, which are copied by the media server, the method further comprises:
negotiating, by the Al component, with the media server port information and media information for receiving the audio stream and the video stream; and
returning, by the Al component, to the media server a uniform resource locator ,URL, address and the port information for receiving the audio stream and the video stream.

3. The method according to claim 1, wherein recognizing, by the Al component, the specific content in the audio stream and/or the video stream comprises:
transcribing, by the Al component, the audio stream into text, and sending the text to a service application, such that the service application recognizes a keyword in the text, and queries an animation effect corresponding to the keyword.

4. The method according to claim 1, wherein recognizing, by the Al component, the specific content in the audio stream and/or the video stream further comprises:
recognizing, by the Al component, a specific action in the video stream, and sending a recognition result to a service application, such that the service application queries an animation effect corresponding to the specific action.

5. The method according to claim 1, the animation effect comprises at least one of the following: a static image or a dynamic video.

6. A method for audio/video calling, the method comprising:
after an audio/video call between a calling user and a called user is anchored to a media server, copying, by the media server, to an artificial intelligence ,Al, component an audio stream and a video stream of the audio/video call between the calling user and the called user; and
according to a recognition result of specific content in the audio stream and/or the video stream by the Al component, superimposing, by the media server, on the audio/video call between the calling user and the called user an animation effect corresponding to the specific content.

7. The method according to claim 6, wherein before copying, by the media server, to the Al component the audio stream and the video stream of the audio/video call between the calling user and the called user, the method further comprises:
allocating, by the media server, media resources to the calling user and the called user respectively according to an application of a call platform, such that the call platform re-anchors the calling user and the called user to the media server respectively according to the applied media resources for the calling user and the called user.

8. The method according to claim 6, wherein before copying, by the media server, to the Al component the audio stream and the video stream of the audio/video call between the calling user and the called user, the method further comprises:
receiving, by the media server, a request instruction issued by a service application for copying the audio stream and the video stream to the Al component, the request instruction carrying an audio stream ID, a video stream ID, and a URL address of the AI component;
negotiating, by the media server, with the Al component port information and media information for receiving the audio stream and the video stream; and
receiving, by the media server, the URL address and the port information for receiving the audio stream and the video stream, which are returned by the Al component.

9. The method according to claim 6, wherein superimposing, by the media server, on the audio/video call between the calling user and the called user the animation effect corresponding to the specific content comprises:
receiving, by the media server, a media processing instruction from a service application, and obtaining the animation effect according to a URL of the animation effect carried in the media processing instruction; and
encoding and synthesizing, by the media server, the animation effect with the audio stream and/or the video stream, and issuing the encoded and synthesized audio stream and video stream to the calling user and the called user.

10. A device for audio/video calling, the device comprising:
a first receiving module for receiving, after an audio/video call between a calling user and a called user is anchored to a media server, an audio stream and a video stream of the audio/video call between the calling user and the called user, which are copied by the media server; and
a recognition processing module for recognizing specific content in the audio stream and/or the video stream, so that the media server superimposes on the audio/video call between the calling user and the called user an animation effect corresponding to the specific content.

11. The device according to claim 10, further comprising:
a first negotiating module, configured to negotiate with the media server port information and media information for receiving the audio stream and the video stream; and
a returning module, configured to return to the media server a uniform resource locator ,URL, address and the port information for receiving the audio stream and the video stream.

12. The device according to claim 10, wherein the recognition processing module comprises:
an audio processing unit, configured to transcribe the audio stream into text, and send the text to a service application, such that the service application recognizes a keyword in the text, and queries an animation effect corresponding to the keyword.

13. The device according to claim 10, wherein the recognition processing module further comprises:
a video processing unit, configured to recognize a specific action in the video stream, and send a recognition result to a service application, such that the service application queries an animation effect corresponding to the specific action.

14. A device for audio/video calling, the device comprising:
a copying and sending module, configured to copy, after an audio/video call between a calling user and a called user is anchored to a media server, to an artificial intelligence ,Al, component an audio stream and a video stream of the audio/video call between the calling user and the called user; and
a superimposing module, configured to superimpose, according to a recognition result of specific content in the audio stream and/or the video stream by the Al component, on the audio/video call between the calling user and the called user an animation effect corresponding to the specific content.

15. The device according to claim 14, further comprising:
a resource allocation module, configured to allocate media resources to the calling user and the called user respectively according to an application of a call platform, such that the call platform re-anchors the calling user and the called user to the media server respectively according to the applied media resources for the calling user and the called user.

16. The device according to claim 14, further comprising:
a second receiving module, configured to receive a request instruction issued by a service application for copying the audio stream and the video stream to the Al component, the request instruction carrying an audio stream ID, a video stream ID, and a URL address of the Al component;
a second negotiating module, configured to negotiate with the Al component port information and media information for receiving the audio stream and the video stream; and
a third receiving module, configured to receive the URL address and the port information for receiving the audio stream and the video stream, which are returned by the Al component.

17. The device according to claim 14, wherein the superimposing module comprises:
a receiving unit, configured to receive a media processing instruction from a service application, and obtain the animation effect according to a URL of the animation effect carried in the media processing instruction; and
a superimposing unit, configured to encode and synthesize the animation effect with the audio stream and/or the video stream, and issue the encoded and synthesized audio stream and video stream to the calling user and the called user.

18. A computer-readable storage medium, storing a computer program, wherein the computer program, when being executed by a processor, implements the method according to any one of claims 1 to 9.

19. An electronic device, comprising a memory, a processor, and a computer program stored on the memory and capable of running on the processor, wherein the computer program, when being executed by the processor, implements the method according to any one of claims 1 to 9.
